# EUROPEAN PATENT APPLICATION

(11) **EP 4 841 855 A1**
(43) Date of publication of application: **18.11.2026**
(21) Application number: 25923623.0
(22) Date of filing: 11.12.2025
(51) Int. Cl.: H02J 7/00, B60L 58/22, H01M 10/44, H01M 10/42

(54) **BATTERY MANAGEMENT SYSTEM, BATTERY DEVICE, AND BALANCING METHOD**

(30) Priority: 07.02.2025 KR 20250015594
(71) Applicant: LG Energy Solution, Ltd., Seoul 07335 (KR)
(72) Inventor: KIM, Youngbeom, Daejeon 34122 (KR)
(74) Representative: Goddar, Heinz J.
(86) International application number: PCT/KR2025/021372
(87) International publication number: WO 2026/168725

(57) **Abstract**

A battery management system connected to a battery module including a plurality of battery cells includes a plurality of cell balancing circuits and a control circuit configured to control the plurality of cell balancing circuits. Each cell balancing circuit includes DC/DC converter shared by a corresponding odd-numbered battery cell and a corresponding even-numbered battery cell among the plurality of battery cells and having an output terminal connected to a positive terminal of the battery module, a first switch connected between the corresponding odd-numbered battery cell and an input terminal of the DC/DC converter, and a second switch connected between the corresponding even-numbered battery cell and the input terminal.

## Description

### [Technical Field]

### CROSS-REFERENCE TO RELATED APPLICATION

This application claims priority to and the benefit of Korean Patent Application No. 10-2025-0015594 filed in the Korean Intellectual Property Office on February 7, 2025, the entire contents of which are incorporated herein by reference.

The disclosure relates to a battery management system, a battery apparatus, and a balancing method.

### [Background Art]

Electric vehicles or hybrid vehicles are automobiles that obtain power by driving a motor mainly using a battery as a power source, and research is being actively conducted as they are an alternative that can solve the pollution and energy problems of internal combustion automobiles. Furthermore, batteries are used in various external devices other than the electric vehicles.

Inside a battery, a plurality of battery cells are connected in series. A voltage deviation between the battery cells may cause over-discharge or over-charge of the battery cells, and also reduce the lifespan of the battery cells. To improve the voltage deviation, a cell balancing circuit is designed within the battery management system.

The cell balancing circuits may be classified into an active balancing circuit and a passive balancing circuit. In a conventional active balancing circuit, one DC (direct current)/DC converter is connected to one battery cell, so the size of the battery management system increases and the unit cost also increases due to many DC/DC converters. In addition, because the conventional active balancing circuit balances only even-numbered battery cells or only odd-numbered battery cells, elements for balancing the odd-numbered battery cells may be wasted when the even-numbered battery cells are balanced, and elements for balancing the even-numbered battery cells may be wasted when the odd-numbered battery cells are balanced.

### [Disclosure]

### [Technical Problem]

Some embodiments may provide a battery management system, a battery apparatus, and a balancing method that can efficiently perform active balancing.

### [Technical Solution]

According to some embodiments, a battery management system connected to a battery module including a plurality of battery cells may include a plurality of cell balancing circuits, and a control circuit configured to control the plurality of cell balancing circuits. Each of the plurality of cell balancing circuits may include a DC/DC converter shared by a corresponding odd-numbered battery cell and a corresponding even-numbered battery cell among the plurality of battery cells, an output terminal of the DC/DC converter being connected to a positive terminal of the battery module, a first switch connected between the corresponding odd-numbered battery cell and an input terminal of the DC/DC converter, and a second switch connected between the corresponding even-numbered battery cell and the input terminal.

According to some embodiments, a battery apparatus may include a battery module including a plurality of battery cells, a plurality of cell balancing circuits, and a control circuit configured to control the plurality of cell balancing circuits. Each of the plurality of cell balancing circuits may be shared by a corresponding odd-numbered battery cell and a corresponding even-numbered battery cell among the plurality of battery cells, may include a DC/DC converter whose output terminal is connected to a positive terminal of the battery module, and may be configured to, in response to control of the control circuit, balance one of the corresponding odd-numbered battery cell and the corresponding even-numbered battery cell through the DC/DC converter, and then balance the other.

According to some embodiments, a balancing method of a battery module including a plurality of battery cells may include discharging a first group including odd-numbered battery cell group among the plurality of battery cells to charge the battery module, discharging the battery module to charge the odd-numbered battery cell group after discharging the odd-numbered battery cell group, discharging an even-numbered battery cell group among the plurality of battery cells to charge the battery module, and discharging the battery module to charge the even-numbered battery cell group after discharging the even-numbered battery cell group.

### [Description of the Drawings]

FIG. 1 is a block diagram illustrating a battery apparatus according to some embodiments.
FIG. 2 is a diagram illustrating a battery apparatus according to some embodiments.
FIG. 3, FIG. 4, FIG. 5, and FIG. 6 are diagrams for explaining a balancing operation of a battery apparatus according to some embodiments.
FIG. 7 is a diagram illustrating a cell balancing circuit according to some embodiments.
FIG. 8 is a diagram illustrating a cell balancing circuit according to some embodiments.
FIG. 9 is a flowchart illustrating a balancing method according to some embodiments.

### [Mode for Invention]

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

When it is described that an element is "connected" to another element, it should be understood that the element may be directly connected to the other element or connected to the other element through a third element. On the other hand, when it is described that an element is "directly connected" to another element, it should be understood that the element is connected to the other element through no third element.

As used herein, a singular form may be intended to include a plural form as well, unless the explicit expression such as "one" or "single" is used.

In flowcharts described with reference to the drawings, the order of operations or steps may be changed, several operations or steps may be merged, a certain operation or step may be divided, and a specific operation or step may not be performed.

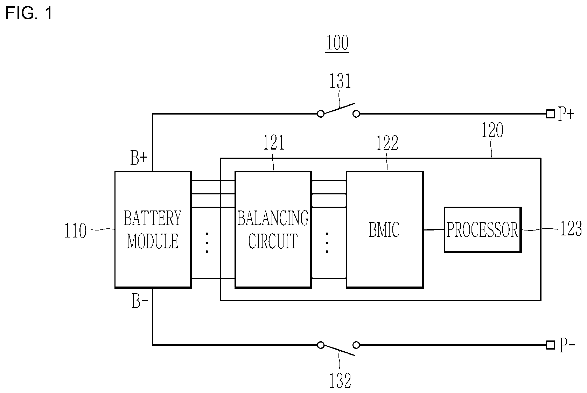

FIG. 1 is a block diagram illustrating a battery apparatus according to some embodiments.

Referring to FIG. 1, a battery apparatus 100 may include a battery module 110, a battery management system (BMS) 120, and switches 131 and 132. The battery apparatus 100 may be electrically connected to an external device through a positive link terminal P+ and a negative link terminal P-. In some embodiments, when the external device is a load, the battery apparatus 100 may be discharged by operating as a power source that supplies power to the load. When the external device is a charger, the battery apparatus 100 may be charged by receiving external power through the charger. In some embodiments, the external device operating as the load may be, for example, an electronic device, a mobility device, or an energy storage system (ESS), and the mobility device may be, for example, a vehicle such as an electric vehicle, a hybrid vehicle, or smart mobility. The battery apparatus 100 may be called a battery pack.

The battery module 110 may include a plurality of battery cells (not shown). In some embodiments, the plurality of battery cells may be connected in series. In some embodiments, the battery apparatus 100 may include a plurality of battery modules 110. The plurality of battery cells of the battery module 110 may each be connected to the battery management system 120 through wiring.

The switch 131 may be connected between a positive terminal B+ of the battery module 110 and the positive link terminal P+, and the switch 132 may be connected between a negative terminal B- of the battery module 110 and the negative link terminal P-. The switches 131 and 132 may be controlled by the battery management system 120 to control the connection between the battery apparatus 100 and the external device. In some embodiments, the switches 131 and 132 may each include a contactor including a relay. In some embodiments, the switches 131 and 132 may each include an electrical switch such as a transistor. In some embodiments, the battery apparatus 100 may further include a driving circuit (not shown) that drives each of the switches 131 and 132 in response to a control signal from the battery management system 120.

The battery management system 120 may collect and analyze information on the battery cells to control operations such as charging and discharging, cell balancing, a protection operation of the battery cells. The battery management system 120 may include a balancing circuit 121, a battery monitoring circuit 122, and a processor 123.

The battery monitoring circuit 122 may be connected to each of the plurality of battery cells included in the battery module 110 through wiring and may monitor states (e.g., cell voltages) of the battery cells. In some embodiments, the battery monitoring circuit 122 may include a plurality of battery monitoring circuits 122 that correspond to the plurality of battery modules 110, respectively. In some embodiments, one battery monitoring circuit 122 may correspond to two or more battery modules 110, or two or more battery monitoring circuits 122 may correspond to one battery module 110. In some embodiments, the battery monitoring circuit 122 may be provided as an integrated circuit (IC), and the battery monitoring circuit 122 provided as the IC is referred to as a battery monitoring IC (BMIC).

The balancing circuit 121 may balance the plurality of battery cells based on the voltages of the battery cells measured by the battery monitoring circuit 122. The balancing circuit 121 may include a plurality of cell balancing circuits (not shown), and each cell balancing circuit may be connected to two corresponding battery cells among the plurality of battery cells to perform balancing of the two corresponding battery cells. Therefore, two battery cells may share one cell balancing circuit. In some embodiments, each cell balancing circuit may be shared by adjacent odd-numbered battery cell and even-numbered battery cell, and may perform balancing of one battery cell among the odd-numbered battery cell and the even-numbered battery cell, and then perform balancing of the other battery cell. While each cell balancing circuit performs balancing of the odd-numbered battery cell, other cell balancing circuits may also perform balancing of corresponding odd-numbered battery cells, and while each cell balancing circuit performs balancing of the even-numbered battery cell, the other cell balancing circuits may also perform balancing of corresponding even-numbered battery cells.

The processor 123 may receive monitoring information from the battery monitoring circuit 122 and may control operations of the battery monitoring circuit 122. The processor 123 may control operations of the switches 131 and 132. The processor 123 may be a processing circuitry, and may be, for example, a microcontroller unit (MCU).

In some embodiments, the battery monitoring circuit 122 and/or the processor 123 may operate as a control circuit that controls operations of the balancing circuit 121.

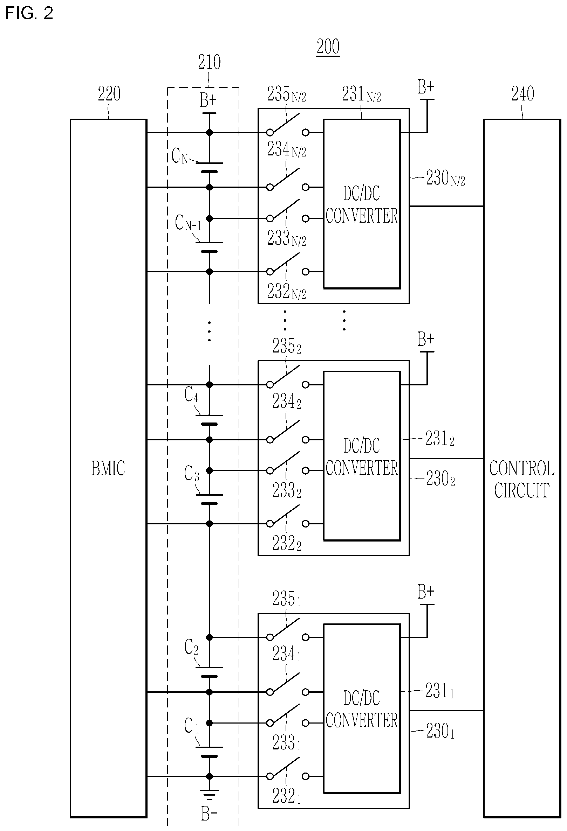

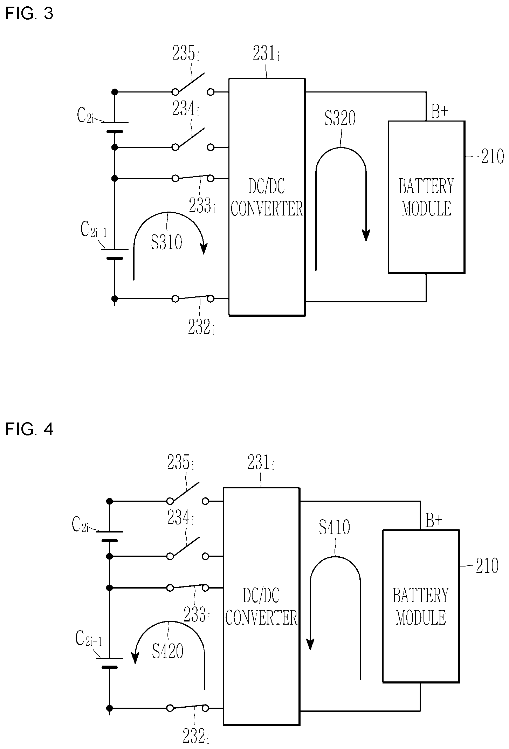

FIG. 2 is a diagram illustrating a battery apparatus according to some embodiments, and FIG. 3, FIG. 4, FIG. 5, and FIG. 6 are diagrams for explaining a balancing operation of a battery apparatus according to some embodiments.

Referring to FIG. 2, a battery apparatus 200 may include a battery module 210, a battery monitoring circuit 220, a plurality of cell balancing circuits 230₁, 230₂, ..., 230_{N/2}, and a control circuit 240.

The battery module 210 may include a plurality of battery cells C₁, C₂, ..., C_{N} connected in series. A positive electrode of the last battery cell (e.g., the topmost battery cell) C_{N} among the plurality of battery cells C₁-C_{N} may be connected to a positive terminal B+ of the battery module 210, and a negative electrode of the first battery cell (e.g., the bottommost battery cell) C₁ among the plurality of battery cells C₁-C_{N} may be connected to a negative terminal B- of the battery module 210.

The battery monitoring circuit 220 may be connected to the positive electrodes and negative electrodes of the plurality of battery cells C₁-C_{N} through wirings and may monitor the voltages of the battery cells C₁-C_{N}. In some embodiments, the battery monitoring circuit 220 may be provided as a BMIC 220.

Each cell balancing circuit 230ᵢ may be connected to two corresponding battery cells among the plurality of battery cells C₁-C_{N}, i.e., a corresponding odd-numbered battery cell C₂ᵢ₋₁ and a corresponding even-numbered battery cell C₂ᵢ, and may balance the two battery cells C₂ᵢ₋₁ and C₂ᵢ. Here, i is an integer between 1 and N/2.

Each cell balancing circuit 230ᵢ may include a DC/DC converter 231ᵢ, and the DC/DC converter 231ᵢ may be a dual-input single-output DC/DC converter. In some embodiments, the DC/DC converter 231ᵢ may be an inductor-based DC/DC converter. In the dual inputs of the DC/DC converter 231ᵢ, one input (first input) may be connected to the corresponding odd-numbered battery cell C₂ᵢ₋₁ to receive a voltage of the odd-numbered battery cell C₂ᵢ₋₁ as input, and the other input (second input) may be connected to the corresponding even-numbered battery cell C₂ᵢ to receive a voltage of the even-numbered battery cell C₂ᵢ as input. An output of the DC/DC converter 231ᵢ may be connected to the positive terminal B+ of the battery module 210, i.e., the positive electrode B+ of the last battery cell C_{N}.

In some embodiments, each cell balancing circuit 230ᵢ may further include a switch 232ᵢ connected between a negative input of the first input in the dual inputs of the DC/DC converter 231ᵢ and the negative electrode of the corresponding odd-numbered battery cell C₂ᵢ₋₁, and a switch 233ᵢ connected between a positive input of the first input and the positive electrode of the corresponding odd-numbered battery cell C₂ᵢ₋₁. Each cell balancing circuit 230ᵢ may further include a switch 234ᵢ connected between a negative input of the second input in the dual inputs of the DC/DC converter 231ᵢ and the negative electrode of the corresponding even-numbered battery cell C₂ᵢ, and a switch 235ᵢ connected between a positive input of the second input and the positive electrode of the corresponding even-numbered battery cell C₂ᵢ. When the switches 232ᵢ and 233ᵢ are turned on, the DC/DC converter 231ᵢ may operate with the voltage of the odd-numbered battery cell C₂ᵢ₋₁ as input, and then operate with a voltage of the battery module 210 as input. When the switches 234ᵢ and 235ᵢ are turned on, the DC/DC converter 231ᵢ may operate with the voltage of the even-numbered battery cell C₂ᵢ as input, and then operate with the voltage of the battery module 210 as input. In some embodiments, the switches 232ᵢ, 233ᵢ, 234ᵢ, and 235ᵢ may be provided as a component of the DC/DC converter 231ᵢ.

The control circuit 240 may control the cell balancing circuits 230₁-230_{N/2} based on the voltages of the battery cells C₁-C_{N} monitored by the battery monitoring circuit 220. In some embodiments, the control circuit 240 may control the cell balancing circuits 230₁-230_{N/2} so that the battery cells C₁-C_{N} are discharged to the lowest voltage among the voltages of the battery cells C₁-C_{N}.

The control circuit 240 may control the cell balancing circuits 230₁-230_{N/2} to first balance one group between a group of odd-numbered battery cells C₁, C₃, ..., C_{N-1} and a group of even-numbered battery cells C₂, C₄, ..., C_{N}, and then balance the other group. For example, the control circuit 240 may control the cell balancing circuits 230₁-230_{N/2} to balance only the odd-numbered battery cells C₁, C₃, and C_{N-1} and then balance only the even-numbered battery cells C₂, C₄, and C_{N}. As another example, the control circuit 240 may control the cell balancing circuits 230₁-230_{N/2} to balance only the even-numbered battery cells C₂, C₄, and C_{N} and then balance only the odd-numbered battery cells C₁, C₃, and C_{N-1}.

When balancing the odd-numbered battery cells C₁, C₃, and C_{N-1}, as shown in FIG. 3, the control circuit 240 may control the DC/DC converter 231ᵢ of the cell balancing circuit 230ᵢ so that the odd-numbered battery cell C₂ᵢ₋₁ is discharged (S310). The energy discharged from the battery cell C₂ᵢ₋₁ may be transferred to the positive terminal B+ of the battery module 210, i.e., the positive electrode of the topmost battery cell C_{N}, to be charged into the battery module 210 (S320). For example, the discharged energy of the odd-numbered battery cells may be charged into the plurality of battery cells C₁-C_{N} included in the battery module 210. Next, as shown in FIG. 4, the control circuit 240 may control the DC/DC converter 231ᵢ so that the battery module 210 is discharged (S410). The energy discharged from the battery module 210 may be transferred to the corresponding odd-numbered battery cell C₂ᵢ₋₁ and may charge the battery cells C₁-C_{N} so that the voltages of the battery cells C₁-C_{N} become uniform (S420). In this case, the switches 232ᵢ and 233ᵢ connected to the odd-numbered battery cell C₂ᵢ₋₁ may be turned on, and the switches 234ᵢ and 235ᵢ connected to the even-numbered battery cell C₂ᵢ may be turned off. In some embodiments, the DC/DC converter 231ᵢ of the cell balancing circuit 230ᵢ may operate in a dual-input single-output boost mode when the battery cell C₂ᵢ₋₁ is discharged, and the DC/DC converter 231ᵢ may operate in a single-input dual-output buck mode when the battery cell C₂ᵢ₋₁ is charged.

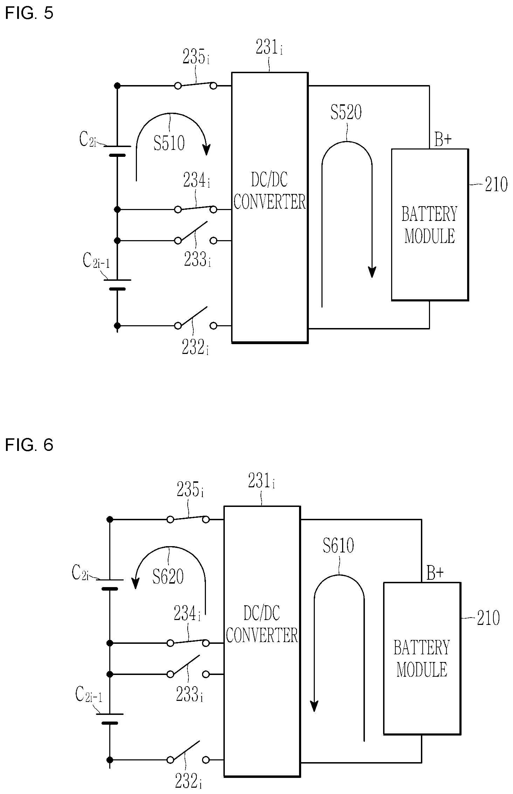

Similarly, when balancing the even-numbered battery cells C₂, C₄, and C_{N}, as shown in FIG. 5, the control circuit 240 may control the DC/DC converter 231ᵢ of the cell balancing circuit 230ᵢ so that the even-numbered battery cell C₂ᵢ is discharged (S510). The energy discharged from the battery cell C₂ᵢ may be transferred to the positive terminal B+ of the battery module 210, i.e., the positive electrode of the topmost battery cell C_{N}, to be charged into the battery module 210 (S520). For example, the discharged energy of the even-numbered battery cells may be charged into the plurality of battery cells C₁-C_{N} included in the battery module 210. Next, as shown in FIG. 6, the control circuit 240 may control the DC/DC converter 231ᵢ so that the battery module 210 is discharged (S610). The energy discharged from the battery module 210 may be transferred to the corresponding odd-numbered battery cell C₂ᵢ and may charge the battery cells C₁-C_{N} so that the voltages of the battery cells C₁-C_{N} become uniform (S620). In some embodiments, the DC/DC converter 231ᵢ of the cell balancing circuit 230ᵢ may operate in a dual-input single-output boost mode when the battery cell C₂ᵢ is discharged, and the DC/DC converter 231ᵢ may operate in a single-input dual-output buck mode when the battery cell C₂ᵢ is charged.

Although the battery cell C₂ᵢ₋₁ among the odd-numbered battery cells C₁, C₃, and C_{N-1} and the battery cell C₂ᵢ among the even-numbered battery cells C₂, C₄, and C_{N} are shown as representatives in FIG. 3 to FIG. 6, remaining odd-numbered battery cells may also be balanced simultaneously when the battery cell C₂ᵢ₋₁ is balanced, and remaining even-numbered battery cells may also be balanced simultaneously when the battery cell C₂ᵢ is balanced.

In some embodiments, the control circuit 240 may be a processor (e.g., 123 in FIG. 1) of the battery management system. In some embodiments, the battery monitoring circuit 220 may operate as the control circuit 240.

As described above, because the odd-numbered battery cell C₂ᵢ₋₁ and the even-numbered battery cell C₂ᵢ share the DC/DC converter 231ᵢ, and the even-numbered battery cell C₂ᵢ may be not balanced while the odd-numbered battery cell C₂ᵢ₋₁ is balanced, and the odd-numbered battery cell C₂ᵢ₋₁ may be not balanced while the even-numbered battery cell C₂ᵢ is balanced. As a result, the number of DC/DC converters 231ᵢ can be reduced, thereby reducing the unit cost and size of the battery management system. In some embodiments, after the entire battery module 210 is charged with the energy discharged from the battery cell C₂ᵢ₋₁ or C₂ᵢ, the battery cell C₂ᵢ₋₁ or C₂ᵢ may be charged again with the energy charged in the battery module 210, thereby making the voltages of the plurality of battery cells uniform.

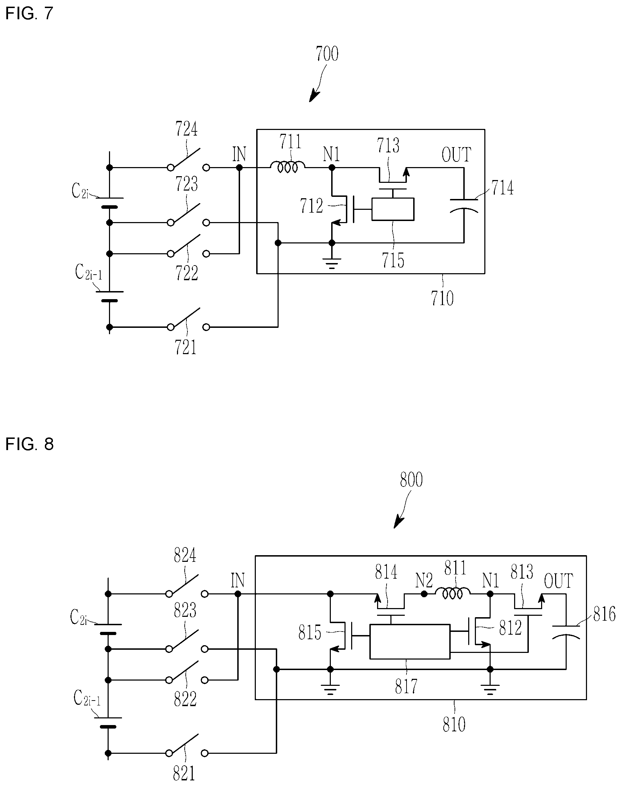

FIG. 7 is a diagram illustrating a cell balancing circuit according to some embodiments.

Referring to FIG. 7, a cell balancing circuit 700 may include a boost converter type DC/DC converter 710. The cell balancing circuit 700 may be connected to a corresponding odd-numbered battery cell (e.g., C₂ᵢ₋₁) and a corresponding even-numbered battery cell (e.g., C₂ᵢ) among a plurality of battery cells (e.g., C₁-C_{N} in FIG. 2), and may control balancing of the battery cells C₂ᵢ₋₁ and C₂ᵢ.

The DC/DC converter 710 may include an inductor 711, switches 712 and 713, and a capacitor 714. The inductor 711 may be connected between an input terminal IN of the DC/DC converter 710 and a node N1. For example, a first terminal of the inductor 711 may be connected to the input terminal IN, and a second terminal of the inductor 711 may be connected to the node N1. The switch 712 may be connected between the node N1 and a ground terminal, and the switch 713 may be connected between the node N1 and an output terminal OUT of the DC/DC converter 710. In some embodiments, each of the switches 712 and 713 may be a transistor. For example, each of the switches 712 and 713 may be an n-channel field effect transistor (FET). In this case, drains of the FETs 712 and 713 may be connected to the node N1, a source of the FET 712 may be connected to the ground terminal, and a source of the FET 713 may be connected to the output terminal OUT. The switches 712 and 713 may be controlled by a control circuit (e.g., 240 in FIG. 2). In some embodiments, the cell balancing circuit 700 may further include a driver 715 that drives the switches 712 and 713 according to the control of the control circuit 240. The capacitor 714 may be connected between the output terminal OUT and the ground terminal. For example, a first terminal of the capacitor 714 may be connected to the output terminal OUT, and a second terminal of the capacitor 714 may be connected to the ground terminal. The output terminal OUT may be connected to a positive terminal of a battery module (e.g., 210 in FIG. 2).

The cell balancing circuit 700 may further include a switch 721 connected between a negative electrode of the odd-numbered battery cell C₂ᵢ₋₁ and the ground terminal, a switch 722 connected between a positive electrode of the odd-numbered battery cell C₂ᵢ₋₁ and the input terminal IN of the DC/DC converter 710, a switch 723 connected between a negative electrode of the even-numbered battery cell C₂ᵢ and the ground terminal, and a switch 724 connected between a positive electrode of the even-numbered battery cell C₂ᵢ and the input terminal IN of the DC/DC converter 710.

In a case of balancing the odd-numbered battery cell C₂ᵢ₋₁, because a voltage of the battery module 210 is higher than a voltage of the battery cell C₂ᵢ₋₁, the control circuit 240 may first operate the DC/DC converter 710 in a boost mode. In response to the control of the control circuit 240, the switches 721 and 722 may be turned on, and the switch 712 of the DC/DC converter 710 may be turned on. In this case, the switches 723, 724, and 713 may be in an off state. Then, as the battery cell C₂ᵢ₋₁ is discharged, a current may be supplied to the inductor 711, and the current of the inductor 711 may increase. Next, in response to the control of the control circuit 240, the switch 712 of the DC/DC converter 710 may be turned off and the switch 713 may be turned on. Then, by an energy charged in the inductor 711, the voltage of the battery cell C₂ᵢ₋₁ may be discharged, and the battery module 210 may be charged.

Next, the control circuit 240 may operate the DC/DC converter 710 in a buck mode to discharge an energy of the battery module 210 to the odd-numbered battery cell C₂ᵢ₋₁. In response to the control of the control circuit 240, the switches 721 and 722 may be turned on, and the switch 713 of the DC/DC converter 710 may be turned on. In this case, the switches 723, 724, and 712 may be in an off state. Then, as the battery module 210 is discharged, the current of the inductor 711 may increase. In some embodiments, the current may flow through a body diode of the switch 713. Next, in response to the control of the control circuit 240, the switch 713 of the DC/DC converter 710 may be turned off and the switch 712 may be turned on. Then, the battery cell C₂ᵢ₋₁ may be charged by the energy charged in the inductor 711. In some embodiments, the current may flow through a body diode of the switch 712.

In a case of balancing the even-numbered battery cell C₂ᵢ, similarly to the balancing of the odd-numbered battery cell C₂ᵢ₋₁, the control circuit 240 may first operate the DC/DC converter 710 in the boost mode. In response to the control of the control circuit 240, the switches 723 and 724 may be turned on, and the switch 712 of the DC/DC converter 710 may be turned on. In this case, the switches 721, 722, and 713 may be in an off state. Then, as the battery cell C₂ᵢ is discharged, a current may be supplied to the inductor 711, and the current of the inductor 711 may increase. Next, in response to the control of the control circuit 240, the switch 712 of the DC/DC converter 710 may be turned off and the switch 713 may be turned on. Then, by an energy charged in the inductor 711, the voltage of the battery cell C₂ᵢ may be discharged, and the battery module 210 may be charged.

Next, the control circuit 240 may operate the DC/DC converter 710 in the buck mode to discharge the energy of the battery module 210 to the even-numbered battery cell. In response to the control of the control circuit 240, the switches 723 and 724 may be turned on, and the switch 713 of the DC/DC converter 710 may be turned on. In this case, the switches 721, 722, and 712 may be in an off state. Then, as the battery module 210 is discharged, the current of the inductor 711 may increase. Next, in response to the control of the control circuit 240, the switch 713 of the DC/DC converter 710 may be turned off and the switch 712 may be turned on. Then, the battery cell C₂ᵢ may be charged by the energy charged in the inductor 711.

FIG. 8 is a diagram illustrating a cell balancing circuit according to some embodiments.

Referring to FIG. 8, a cell balancing circuit 800 may include a buck-boost converter type DC/DC converter 810. The cell balancing circuit 800 may be connected to a corresponding odd-numbered battery cell (e.g., C₂ᵢ₋₁) and a corresponding even-numbered battery cell (e.g., C₂ᵢ) among a plurality of battery cells (e.g., C₁-C_{N} in FIG. 2), and may control balancing of the battery cells C₂ᵢ₋₁ and C₂ᵢ.

The DC/DC converter 810 may include an inductor 811, switches 812, 813, 814, and 815, and a capacitor 816. The inductor 811 may be connected between a first node N1 and a second node N2. For example, a first terminal of the inductor 811 may be connected to the second node N2, and a second terminal of the inductor 811 may be connected to the first node N1. The switch 812 may be connected between the first node N1 and a ground terminal, and the switch 813 may be connected between the first node N1 and an output terminal OUT of the DC/DC converter 810. The switch 814 may be connected between an input terminal IN of the DC/DC converter 810 and the second node N2, and the switch 815 may be connected between the input terminal IN and the ground terminal. In some embodiments, the switch 815 may be omitted. In some embodiments, each of the switches 812, 813, 814, and 815 may be a transistor. For example, each of the switches 812, 813, 814, and 815 may be an n-channel FET. In this case, drains of the FETs 812 and 813 may be connected to the first node N1, a source of the FET 814 and a drain of the FET 815 may be connected to the input terminal IN, a drain of the FET 814 may be connected to the second node N2, sources of the FETs 812 and 815 may be connected to the ground terminal, and the source of the FET 813 may be connected to the output terminal OUT. The switches 812, 813, 814, and 815 may be controlled by a control circuit (e.g., 240 in FIG. 2). In some embodiments, the cell balancing circuit 800 may further include a driver 817 that drives the switches 812, 813, 814, and 815 according to the control of the control circuit 240. The capacitor 816 may be connected between the output terminal OUT and the ground terminal. For example, a first terminal of the capacitor 816 may be connected to the output terminal OUT, and a second terminal of the capacitor 816 may be connected to the ground terminal. The output terminal OUT may be connected to a positive terminal of a battery module (e.g., 210 in FIG. 2).

The cell balancing circuit 800 may further include a switch 821 connected between a negative electrode of the odd-numbered battery cell C₂ᵢ₋₁ and the ground terminal, a switch 822 connected between a positive electrode of the odd-numbered battery cell C₂ᵢ₋₁ and the input terminal IN of the DC/DC converter 810, a switch 823 connected between a negative electrode of the even-numbered battery cell C₂ᵢ and the ground terminal, and a switch 824 connected between a positive electrode of the even-numbered battery cell C₂ᵢ and the input terminal IN of the DC/DC converter 810.

In a case of balancing the odd-numbered battery cell C₂ᵢ₋₁, because a voltage of the battery module 210 is higher than a voltage of the battery cell C₂ᵢ₋₁, the control circuit 240 may first operate the DC/DC converter 810 in a boost mode. In response to the control of the control circuit 240, the switches 821 and 822 may be turned on, and the switches 812 and 814 of the DC/DC converter 810 may be turned on. In this case, the switches 823, 824, 813, and 815 may be in an off state. Then, as the battery cell C₂ᵢ₋₁ is discharged, a current may be supplied to the inductor 811, and the current of the inductor 811 may increase. In some embodiments, the current may flow through a body diode of the switch 814. Next, in response to the control of the control circuit 240, the switch 812 of the DC/DC converter 810 may be turned off and the switch 813 may be turned on. Then, by an energy charged in the inductor 811, the voltage of the battery cell C₂ᵢ₋₁ may be discharged, and the battery module 210 may be charged.

Next, the control circuit 240 may operate the DC/DC converter 810 in a buck mode to discharge an energy of the battery module 210 to the odd-numbered battery cell. In response to the control of the control circuit 240, the switches 821 and 822 may be turned on, and the switches 813 and 814 of the DC/DC converter 810 may be turned on. In this case, the switches 823, 824, 812, and 815 may be in an off state. Then, as the battery module 210 is discharged, the current of the inductor 811 may increase. In some embodiments, the current may flow through a body diode of the switch 813. Next, in response to the control of the control circuit 240, the switch 813 of the DC/DC converter 810 may be turned off and the switch 812 may be turned on. Then, the battery cell C₂ᵢ₋₁ may be charged by the energy charged in the inductor 811. In some embodiments, the current may flow through a body diode of the switch 812.

In a case of balancing the even-numbered battery cell C₂ᵢ, similarly to the balancing of the odd-numbered battery cell C₂ᵢ₋₁, the control circuit 240 may first operate the DC/DC converter 810 in the boost mode. In response to the control of the control circuit 240, the switches 823 and 824 may be turned on, and the switches 812 and 814 of the DC/DC converter 810 may be turned on. In this case, the switches 821, 822, 813, and 815 may be in an off state. Then, as the battery cell C₂ᵢ is discharged, a current may be supplied to the inductor 811, and the current of the inductor 811 may increase. Next, in response to the control of the control circuit 240, the switch 812 of the DC/DC converter 810 may be turned off and the switch 813 may be turned on. Then, by an energy charged in the inductor 811, the voltage of the battery cell C₂ᵢ may be discharged, and the battery module 210 may be charged.

Next, the control circuit 240 may operate the DC/DC converter 810 in the buck mode to discharge the energy of the battery module 210 to the even-numbered battery cell. In response to the control of the control circuit 240, the switches 823 and 824 may be turned on, and the switches 813 and 814 of the DC/DC converter 810 may be turned on. In this case, the switches 821, 822, 812, and 815 may be in an off state. Then, as the battery module 210 is discharged, the current of the inductor 811 may increase. Next, in response to the control of the control circuit 240, the switch 813 of the DC/DC converter 810 may be turned off and the switch 812 may be turned on. Then, the battery cell C₂ᵢ may be charged by the energy charged in the inductor 811.

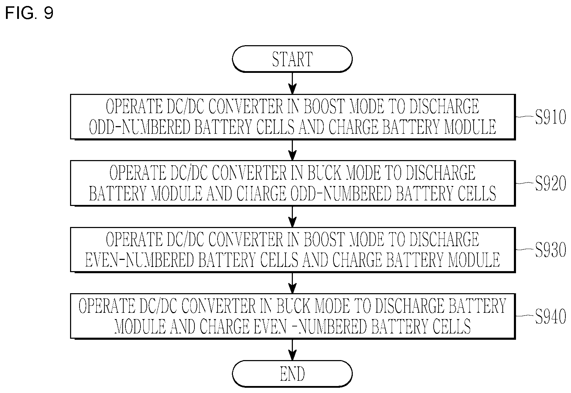

FIG. 9 is a flowchart illustrating a balancing method according to some embodiments.

Referring to FIG. 9, a control circuit of a battery management system may operate a DC/DC converter in a boost mode to discharge one group between a group of odd-numbered battery cells and a group of even-numbered battery cells (e.g., the group of odd-numbered battery cells) to charge a battery module (S910). The control circuit may operate the DC/DC converter in a buck mode to discharge the battery module to charge the odd-numbered battery cells (S920).

The control circuit may operate the DC/DC converter in the boost mode to discharge the other group between the group of odd-numbered battery cells and the group of even-numbered battery cells (e.g., the group of even-numbered battery cells) to charge the battery module (S930). The control circuit may operate the DC/DC converter in the buck mode to discharge the battery module to charge the even-numbered battery cells (S940).

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

## Claims

1. A battery management system, wherein the battery management system is connected to a battery module including a plurality of battery cells, the battery management system comprising:
a plurality of cell balancing circuits; and
a control circuit configured to control the plurality of cell balancing circuits,
wherein each of the plurality of cell balancing circuits comprises:
a direct current (DC)/DC converter shared by a corresponding odd-numbered battery cell and a corresponding even-numbered battery cell among the plurality of battery cells, an output terminal of the DC/DC converter being connected to a positive terminal of the battery module;
a first switch connected between the corresponding odd-numbered battery cell and an input terminal of the DC/DC converter; and
a second switch connected between the corresponding even-numbered battery cell and the input terminal.

2. The battery management system of claim 1, wherein the first switch comprises a switch connected between a positive electrode of the corresponding odd-numbered battery cell and the input terminal, and a switch connected between a negative electrode of the corresponding odd-numbered battery cell and a ground terminal, and
wherein the second switch comprises a switch connected between a positive electrode of the corresponding even-numbered battery cell and the input terminal, and a switch connected between a negative electrode of the corresponding even-numbered battery cell and the ground terminal.

3. The battery management system of claim 1, wherein the control circuit is configured to balance one of the corresponding odd-numbered battery cell and the corresponding even-numbered battery cell through the DC/DC converter and then balances the other.

4. The battery management system of claim 3, wherein the control circuit is configured to:
turn on the first switch and turn off the second switch when balancing the corresponding odd-numbered battery cell; and
turn on the second switch and turn off the first switch when balancing the corresponding even-numbered battery cell.

5. The battery management system of claim 3, wherein the control circuit is configured to:
operate the DC/DC converter in a boost mode and then in a buck mode when balancing the corresponding odd-numbered battery cell; and
operate the DC/DC converter in the boost mode and then in the buck mode when balancing the corresponding even-numbered battery cell.

6. The battery management system of claim 3, wherein the DC/DC converter is configured to, when balancing the corresponding odd-numbered battery cell, discharge the corresponding odd-numbered battery cell to charge the battery module, and then discharge the battery module to charge the corresponding odd-numbered battery cell, and
wherein the DC/DC converter is configured to, when balancing the corresponding even-numbered battery cell, discharge the corresponding even-numbered battery cell to charge the battery module, and then discharge the battery module to charge the corresponding even-numbered battery cell.

7. The battery management system of claim 1, wherein the DC/DC converter comprises:
an inductor connected between the input terminal and a node;
a third switch connected between the node and a ground terminal;
a fourth switch connected between the node and the output terminal; and
a capacitor connected between the output terminal and the ground terminal.

8. The battery management system of claim 7, wherein the control circuit is configured to, during balancing, sequentially perform:
an operation of turning on the third switch and turning off the fourth switch, and then turning off the third switch and turning on the fourth switch; and
an operation of turning off the third switch and turning on the fourth switch, and then turning off the third switch and turning on the fourth switch.

9. The battery management system of claim 1, wherein the DC/DC converter comprises:
an inductor connected between a first node and a second node;
a third switch connected between the first node and a ground terminal;
a fourth switch connected between the first node and the output terminal;
a fifth switch connected between the second node and the input terminal; and
a capacitor connected between the output terminal and the ground terminal.

10. The battery management system of claim 9, wherein the control circuit is configured to, during balancing, sequentially perform:
an operation of turning on the third switch and the fifth switch and turning off the fourth switch, and then turning off the third switch and turning on the fourth switch and the fifth switch; and
an operation of turning off the third switch and turning on the fourth switch and the fifth switch, and then turning on the third switch and the fifth switch and turning off the fourth switch.

11. A battery apparatus comprising:
a battery module comprising a plurality of battery cells;
a plurality of cell balancing circuits; and
a control circuit configured to control the plurality of cell balancing circuits,
wherein each of the plurality of cell balancing circuits is shared by a corresponding odd-numbered battery cell and a corresponding even-numbered battery cell among the plurality of battery cells, comprises a DC/DC converter whose output terminal is connected to a positive terminal of the battery module, and is configured to, in response to control of the control circuit, balance one of the corresponding odd-numbered battery cell and the corresponding even-numbered battery cell through the DC/DC converter, and then balance the other.

12. The battery apparatus of claim 11, wherein the control circuit is configured to:
operate the DC/DC converter in a boost mode and then in a buck mode when balancing the corresponding odd-numbered battery cell; and
operate the DC/DC converter in the boost mode and then in the buck mode when balancing the corresponding even-numbered battery cell.

13. The battery apparatus of claim 11, wherein the DC/DC converter is configured to, when balancing the corresponding odd-numbered battery cell, discharge the corresponding odd-numbered battery cell to charge the battery module, and then discharge the battery module to charge the corresponding odd-numbered battery cell, and
wherein the DC/DC converter is configured to, when balancing the corresponding even-numbered battery cell, discharge the corresponding even-numbered battery cell to charge the battery module, and then discharge the battery module to charge the corresponding even-numbered battery cell.

14. A balancing method of a battery module including a plurality of battery cells, the method comprising:
discharging a first group including odd-numbered battery cell group among the plurality of battery cells to charge the battery module;
discharging the battery module to charge the odd-numbered battery cell group after discharging the odd-numbered battery cell group;
discharging an even-numbered battery cell group among the plurality of battery cells to charge the battery module; and
discharging the battery module to charge the even-numbered battery cell group after discharging the even-numbered battery cell group.

15. The balancing method of claim 14, wherein an odd-numbered battery cell among the odd-numbered battery cell group and an even-numbered battery cell corresponding to the odd-numbered battery cell among the even-numbered battery cell group share one DC/DC converter,
wherein the discharging the odd-numbered battery cell group comprises operating the DC/DC converter in a boost mode,
wherein the discharging the even-numbered battery cell group comprises operating the DC/DC converter the boost mode, and
wherein the discharging the battery module comprises operating the DC/DC converter in a buck mode.
